# EUROPEAN PATENT APPLICATION

(11) **EP 0 609 575 A1**
(43) Date of publication of application: **10.08.1994**
(21) Application number: 93201772.6
(22) Date of filing: 21.06.1993
(51) Int. Cl.: B65D 23/08, B65D 23/10

(54) **Composite package**

(30) Priority: 02.02.1993 EP 93870020
(71) Applicant: THE PROCTER & GAMBLE COMPANY, Cincinnati, Ohio 45202 (US)
(72) Inventor: Jacobs, André Marie Gustav, 1982 Zemst (BE)
(74) Representative: Canonici, Jean-Jacques

(57) **Abstract**

A composite package comprising a hollow container (10) having an inner and an outer surface, and one or more recesses (13,13') defining a gripping handle (12), and an outer covering (21) wherein said outer surface of said container is substantially covered by said covering. The covering is made from a polymeric material which has one or more predetermined areas (23,23') which are either separated from, or readily separable from, the remainder of the covering. The position of the predetermined areas corresponds to the position of the gripping handle of the container. Suitable methods for the manufacture of such a composite package are also described.

## Description

### Background of the Invention

The present invention relates to composite packaging, especially for liquid or granular products, and a method for making said packaging.

Various packages have been proposed for use in the consumer goods industries which aim, amongst other things, to minimise the effect on the environment of the packages. At the same time it is generally acknowledged that ease of use for the consumer and the aesthetic appearance of the package should be compromised as little as possible. It has been found that while lighter weight bottles, with thinner walls, have less impact on the environment, they have disadvantages such as the fact that the walls bulge under the weight of the product contained within them.

WO91/00223, published 10th January, 1991 describes a composite bottle made from a thin walled plastic container having a cardboard sleeve. In general, the handle is formed from an area of the sleeve rather than the bottle itself. It is usually necessary to separate the container and the sleeve after use and dispose of them separately for subsequent recycling.

European Patent Application number 92870039.2 describes a composite bottle having polymeric sleeve, which is easily recycled. A bottle with a handle is not mentioned.

Whilst bottles with handles have been sleeved, typically this is done with the sleeve covering the area of the bottle below the handle only.

There remains a need for a bottle with a handle (especially for bottles having a capacity of 1 litre and above), which is suitable for lifting and pouring, and which is lightweight, easy to recycle and yet presents the consumer with a good appearance and is easy to use. Furthermore a package is needed in which the whole of the outside surface is substantially covered by a sleeve or label.

The present invention provides a composite package which comprises a container with a handle and a covering. The covering combines the features of, a lightweight polymeric material having a "hole" which allows the fingers/hand to grip the handle of the container.

These features in combination offer a lightweight, inexpensive, easily recycled package with maximum label area. The container is gripped directly (rather than indirectly by means of the covering) which offers the consumer a good positive grip which is particularly important when using a large bottle full of product.

### Summary of the Invention

A composite package comprising a hollow container having an inner and an outer surface, and one or more recesses defining a gripping handle, and an outer covering wherein said outer surface of said container is substantially covered by said covering. The covering is made from a polymeric material which has one or more predetermined areas which are either separated from, or readily separable from, the remainder of the covering. The position of the predetermined areas corresponds to the position of the gripping handle of the container. Suitable methods for the manufacture of such a composite package are also described.

### Brief Description of the Drawings

Figure 1 is a schematic drawing showing a perspective view of a container of the present invention.

Figure 2 is a schematic drawing showing a perspective view of a container and covering of the present invention.

Figure 3 is a schematic view showing a perspective drawing of a composite container of the present invention, ready for use by the consumer.

### Detailed Description of the Invention

The first aspect of the present invention is a composite package comprising a container with a handle, and a covering.

The covering, which is preferably a preformed sleeve, is made from any suitable polymeric material, although it is preferred that the polymeric material is chosen from the group comprising polyester, polyethylene, polypropylene, or mixtures, or laminates of these.

The predetermined areas may be pre-cut, or they may be defined by lines of weakness in the covering material. A line of weakness is, for example, a perforated line.

The second aspect of the present invention is a method for making a composite package comprising the steps of:
i) blow molding a hollow container which comprises an inner and an outer surface, and one or more recesses defining a gripping handle;
ii) positioning and fixing a covering around said container wherein said outer surface of said container is substantially covered by said covering.
The covering is made from a polymeric material which has one or more predetermined areas which are separated from, or readily separable from, the remainder of the covering. The position of the predetermined areas corresponds to the position of the gripping handle of the container.

In a preferred method, the covering is provided by a sleeve which is positioned and fixed around the container either by stretch wrapping, by heat shrinking, or alternatively the covering is provided by wrap-around labelling. Stretch wrapping and heat shrinking are most preferred.

The predetermined area of the covering which corresponds to the position of the gripping handle of the container is separated from the rest of the covering either by the consumer at the point of end-use, or it is separated from the covering before the covering is positioned and fixed around the container, or it is separated from the covering at the same time as, or immediately after the covering is positioned and fixed around the container.

### The Container

The container as defined herein is any vessel suitable for holding a liquid or granular material, such as a bottle. Usually such a container will have a means for discharging the contents at the point of use, such as an opening, orifice, spout or nozzle, and may furthermore have a means for reclosing and sealing the discharge means such as a cap or screw top. The container can be lifted by the consumer, and its contents discharged by pouring.

Containers which are particularly useful in the present invention are lightweight, plastic bottles. By lightweight, it is meant that the empty container is rigid enough to support its own weight without deformation when empty, but, when filled, the container does not need to have sufficient rigidity to resist at least some deformation (for example, bulging outwards of the sidewall) caused by the weight of the product within it. Strengthening ribs or depressions may be incorporated into the walls of the container in order to increase its structural rigidity. This may enable the overall weight of the container to be further optimised. Optionally the outer surface of the container may be textured.

Typically lightweight, plastic containers may be provided for up to 5 litres of liquid product which have a wall thickness of less than 0.3 mm.

A plastic container may be constructed from any suitable polymeric material such as polyester, polyethylene, polypropylene, polyvinyl chloride or mixtures of these. In this application polyester is taken to include polyethylene terephthalate, polyethylene terephthalate with glycol additive and PETex. Polyethylene may be chosen from the materials comprising high density polyethylene (HDPE), low density polyethylene (LDPE), and linear low density polyethylene (LLDPE). The plastic used may be virgin or post consumer recycled, or mixtures of these.

The plastic container may be manufactured by any suitable method which is known to the man skilled in the art such as extrusion blow molding, injection blow molding, stretch blow molding and orientation blow molding. The preferred manufacturing method is extrusion blow molding. Using this technique an extruder initially forms large diameter preforms, hollow tubes known as parisons.

It is a feature of the present invention that the container comprises a handle which may be any suitable recess or recesses which make it possible for the consumer to grip the container by putting the fingers or hand into the recess or recesses.

The most preferred way of manufacturing a handled container is to position the parison between two halves of a blow mold, the inside of the mold having the desired final shape of the container. When the two halves of the mold are brought together, a portion of the parison is pinched off to form a handle shape and the pinched parison is blown to its final bottle dimensions with a hollow handle and an interconnecting web. The web is then removed to provide a handle for lifting and pouring. The result of this is that the split line of the mold lies along the handle of the finished bottle.

The container may be made in this manner in a single layer, or, alternatively, in a multi-layer construction by techniques of co-extrusion.

US Patent no. 4 368 827 suggests that a plastic container with an integral plastic handle is difficult to make as a lightweight bottle. This has indeed proved to be the case in practice because of the unequal distribution of plastic which occurs around the container when the extrusion blow molding technique described above is used. In order to maintain the compression strength of the container at its weakest point (which is usually along the edge which is opposite to the handle), it is necessary to use a thicker parison which results in a heavier container. However, the present invention addresses this problem by using an outer sleeve to carry some of the compressive load on the container, thereby overcoming the disadvantages arising from the uneven distribution of plastic around the container. In this way it is now possible to use a thinner parison to make a lightweight container with a handle, without the disadvantages of weaknesses due to uneven distribution of plastic around the container.

An alternative, although less preferred manufacturing technique, is stretch blow molding. This technique enables the manufacture of containers which have an integral handle which is solid, rather than hollow.

The cross-section of the container may be any desired shape, subject to the requirement that it has a integral handle. However, the cross-section may be triangular, square, rectangular, rhomboidal, pentagonal, or any other geometric shape which may or may not have sides of equal length. Furthermore some of the surfaces may be curved, rather than flat. Furthermore the cross-section may vary at different distances from the base of the container.

### The Covering

The present invention provides that a covering, made from a polymeric material, substantially covers the outer surface of the container. By this it is meant that at least 50% of the outer surface area of the container is covered by the covering (outer surface area here is taken to exclude the bottom surface of the container and the discharge means - the bottom surface and the discharge means may be covered by the covering, at least prior to first use, but normally they are not covered). It is one of the aims of the present invention that the maximum amount of the outer surface area of the container is covered by the covering, consequently it is preferred that at least 70% of the outer surface of the container is covered, more preferably at least 80%, and most preferably at least 90% of the outer surface of the container is covered.

The covering may be made from any suitable polymeric material including polyester, polyethylene, polypropylene, polyvinyl chloride or mixtures of these.

The polymeric material may also be a biodegradable plastic. Such a plastic can break down naturally into harmless components on disposal.

The covering may be made either from a single film of plastic, or laminated in two or more layers.

The polymeric material may be either coloured or glass clear transparent glossy film which will be printed upon, or, alternatively, in the case of a laminated film, at least one layer of film may be pigmented by the addition of dyes or pigments before or at the point of extruding the laminate.

The covering may be printed upon using any technique. In particular colours (including black and white) may be printed by flexo or gravure printing. A preferred method, known as reverse printing, is to print the colours on the inside of the label in order to maintain its glossiness.

It is a feature of the present invention that a predetermined area of the covering is separated from the rest of the covering at a position corresponding to the position of the gripping handle of the container.

The predetermined areas may be separated either before the covering is positioned around the container. In this case the predetermined area may be cut or punched out from the rest of the covering. Alternatively, the predetermined may be separated from the covering at the same time as, or immediately after the covering is positioned and fixed around the container. Alternatively, the predetermined areas may be separated from the covering by the consumer at the point of end-use.

Preferably, the separation is performed by the consumer which may be facilitated by incorporating lines of weakness around the predetermined areas of the covering to facilitate their removal. A perforated line is one such line of weakness which may be used.

### The Composite Package and Method of Construction

The covering may be fixed around or over the container by any conventional method. One preferred method is to seam the covering to form a tube. A long tube may be formed which is then cut to provide sleeves of the required length.

The covering is preferably attached by gluing, heat shrinking, or stretch wrapping, and normally no additional locking mechanism is necessary to prevent the container and the covering from becoming separated in normal use.

A preferred method of attaching the covering is by stretch wrapping. Particularly suitable labels may be made from polyethylene which is seamed to form a tube and cut to form a sleeve. The sleeve is then stretched, positioned over the container, and then allowed to contract and take the external contours of the container.

An alternative method of attaching the covering is by heat shrinking. A seamed tube is cut to form a sleeve which is positioned over the container. The container and label are then passed through a shrink tunnel in which hot air is blown onto the label sleeve causing it to shrink and take the shape and contours of the bottle.

Another alternative method of attaching the covering is to wrap it around the container and secure it by conventional means, including solvents, hot melt, or by using self adhesive labels as the covering.

One of the benefits of the present invention is that it may be readily recycled. Depending upon what recycling facilities are available at the point of disposal of the empty package, it can either be recycled without separating the container from the covering, or, alternatively, the container (which is generally uncoloured) and the covering (which generally comprises dyes and pigments) may be separated and recycled for reuse.

A preferred embodiment of the invention will now be described in more detail with reference to the Figures. The particular embodiment described below should not be considered as limiting the scope of the invention described herein.

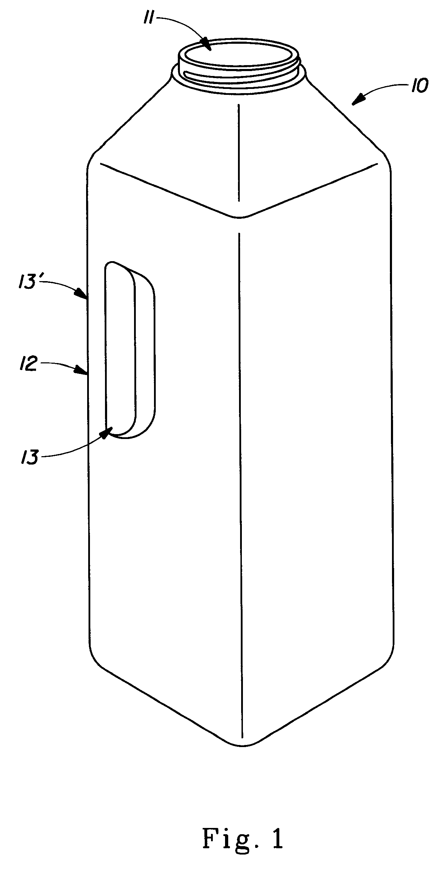

Figure 1 shows a blow molded polyethylene container 10 which is essentially square in cross-section, having a pouring opening 11, and a handle 12. The handled container is formed by placing a heated parison in a blow molding cavity, pinching the parison in the region of the handle, and then blowing the container to its final dimensions. This leaves recesses 13, 13' in the walls of the container where the parison has been pinched. This process leaves a thin web in the gripping region which separates the two recesses from each other. The web is then removed to unite the recesses and leave an open handle which is suitable for gripping by the fingers / hands of the consumer.

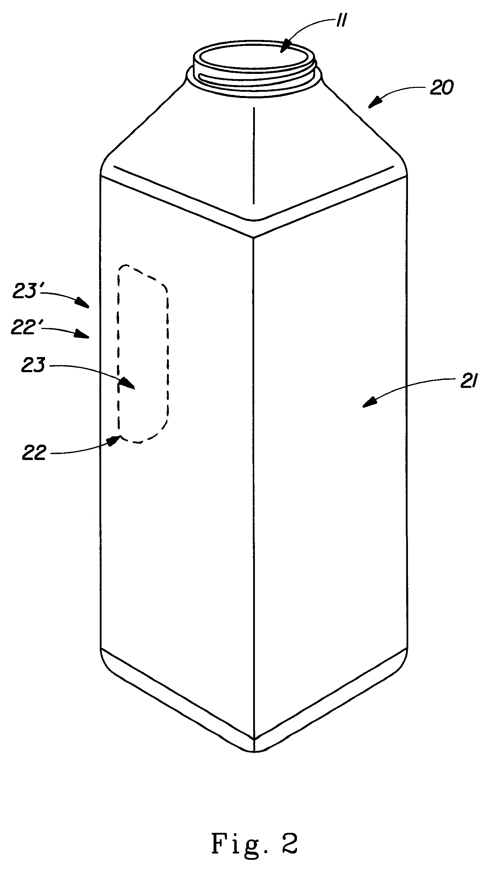

Figure 2 shows a composite container 20 which is made from the container of Figure 1, and a sleeve 21 of polyester which has been stretch wrapped around the outer surface of the container.
The sleeve has two perforated lines 22, 22' which enable a predetermined area 23, 23' of the sleeve to be readily torn away from the remainder of the sleeve by the consumer. When these areas of the sleeve are torn along the perforated lines the position of the two holes in the sleeve corresponds to the position of the recesses 13, 13' in the container which form the handle.

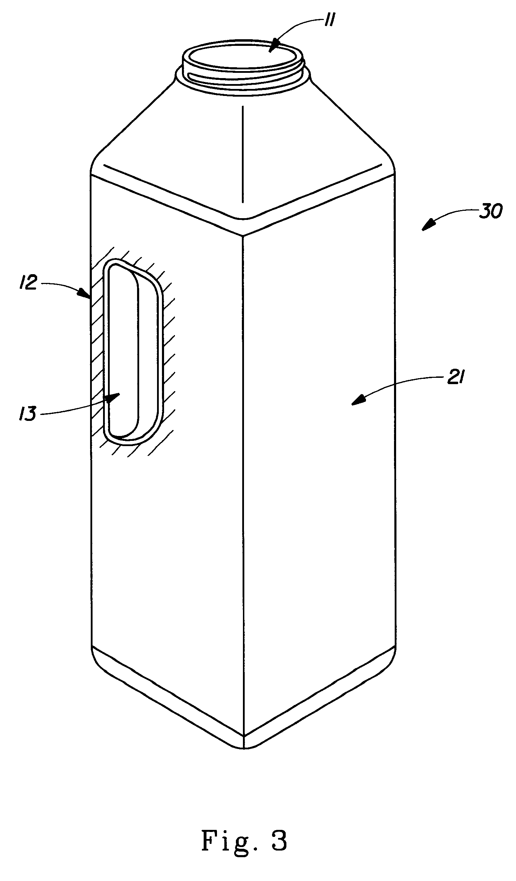

Figure 3 shows a composite container 30 after the predetermined areas of the covering have been separated from the remainder of the covering. This provides access to the recesses 13, 13' in the walls of the container, permitting the consumer to pick up the container by its handle 32, and pour its contents through the opening 11.

## Claims

1. A composite package comprising a hollow container (10) having an inner and an outer surface, and one or more recesses (13, 13') defining a gripping handle (12), and an outer covering (21) wherein said outer surface of said container is substantially covered by said covering, characterised in that the covering is made from a polymeric material having one or more predetermined areas (23, 23') of the covering which are either separated from, or readily separable from, the remainder of the covering, the position of said predetermined areas substantially corresponding to the position of the gripping handle of the container.

2. A composite package according to claim 1 wherein the covering (21) is a preformed sleeve.

3. A composite package according to either claim 1 or claim 2 wherein the covering (21) is made from polymeric material which is chosen from the group comprising polyester, polyethylene, or mixtures, or laminates of these.

4. A composite package according to claim 1 wherein said predetermined areas are defined by lines of weakness (22, 22') in the covering material.

5. A composite package according to claim 4 wherein said line of weakness (22, 22') is a perforated line.

6. A method for making a composite package (30) comprising the steps of:
i) blow molding a hollow container (10) which comprises an inner and an outer surface, and one or more recesses (13, 13') defining a gripping handle (12);
ii) positioning and fixing a covering (21) around said container wherein said outer surface of said container is substantially covered by said covering;
characterised in that the covering is made from a polymeric material having one or more predetermined areas (23, 23') of the covering which are either separated from, or readily separable from, the remainder of the covering, the position of said predetermined areas substantially corresponding to the position of the gripping handle of the container.

7. A method according to claim 6 wherein the covering (21) is provided by a sleeve which is positioned and fixed around the container by stretch wrapping.

8. A method according to claim 6 wherein the covering (21) is provided by a sleeve which is positioned and fixed around the container by heat shrinking.

9. A method according to any of claims 6 to 8 wherein said predetermined area (23, 23') is separated from said covering (21) before the covering is positioned and fixed around the container.

10. A method according to any of claims 6 to 8 wherein said predetermined area (23, 23') is separated from said covering (21) at the same time as, or immediately after the covering is positioned and fixed around the container.
